(19)

**Europäisches Patentamt**
**European Patent Office**
**Office européen des brevets**

(11) **EP 1 610 032 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
***F16H 7/18*** (2006.01)

(21) Anmeldenummer: **04102922.4**

(22) Anmeldetag: **24.06.2004**

(54) **Kombinierte Spann- und Führungsvorrichtung zum Spannen und Führen eines Antriebsmittels und Verwendung einer derartigen Vorrichtung**

Combined tensioning and guiding device for tensioning and guiding a flexible member and use of this device

Dispositif de guidage et de tension pour guidage et tension d'organe flexible ainsi que l'utilisation d'un tel dispositif

(84) Benannte Vertragsstaaten:
**DE FR GB**

(43) Veröffentlichungstag der Anmeldung:
**28.12.2005 Patentblatt 2005/52**

(73) Patentinhaber: **Ford Global Technologies, LLC, A subsidary of Ford**
**Motor Company**
**Dearborn, MI 48126 (US)**

(72) Erfinder: **Kluge, Torsten, Dr.**
**51491 Overath (DE)**

(74) Vertreter: **Drömer, Hans-Carsten et al**
**Ford-Werke Aktiengesellschaft**
**Patentabteilung NH/DRP**
**Henry-Ford-Strasse 1**
**50725 Köln (DE)**

(56) Entgegenhaltungen:
| | |
|---|---|
| EP-A- 0 867 600 | EP-A- 1 030 078 |
| EP-A- 1 148 269 | DE-A- 3 506 770 |
| DE-U- 1 724 654 | GB-A- 628 803 |
| GB-A- 2 259 964 | US-A- 2 766 634 |
| US-A- 4 826 468 | US-A- 5 266 066 |
| US-A1- 2002 042 316 | |

- PATENT ABSTRACTS OF JAPAN Bd. 0062, Nr. 32 (M-172), 18. November 1982 (1982-11-18) & JP 57 134055 A (HONDA GIKEN KOGYO KK), 19. August 1982 (1982-08-19)
- PATENT ABSTRACTS OF JAPAN Bd. 0071, Nr. 69 (M-231), 26. Juli 1983 (1983-07-26) & JP 58 074941 A (HONDA GIKEN KOGYO KK), 6. Mai 1983 (1983-05-06)

**Beschreibung**

Die Erfindung betrifft eine kombinierte Spann- und Führungsvorrichtung zum Spannen und Führen eines Antriebsmittels wie beispielsweise einer Kette oder eines Riemens, insbesondere zur Verwendung in einer Brennkraftmaschine, mit einem Führungsmittel, welches das Antriebsmittel führt, und einem Spannmittel, welches das Antriebsmittel entlang seiner Längsachse mit Zugkräften beaufschlagt und damit spannt.

Des Weiteren betrifft die Erfindung die Verwendung einer derartigen kombinierten Spann- und Führungsvorrichtung.

Eine Vorrichtung der oben genannten Art wird beispielsweise in einem Kraftfahrzeug verwendet. Dabei wird ein Teil der in der Brennkraftmaschine durch die chemische Umsetzung des Kraftstoffes gewonnenen Leistung genutzt, um die für den Betrieb der Brennkraftmaschine und des Kraftfahrzeuges erforderlichen Nebenaggregate, insbesondere die Ölpumpe, die Kühlmittelpumpe, die Lichtmaschine und dergleichen, oder die für die Steuerung der Ventile erforderliche Nockenwelle anzutreiben.

Für den Antrieb werden in der Regel Riemenantriebe oder Kettenantriebe verwendet, wobei im Rahmen der vorliegenden Erfindung die verschiedenen Antriebsmittel - wie Riemen und Kette - zu dem allgemeinen Begriff des Antriebsmittels zusammengefaßt werden d. h. unter den Oberbegriff Antriebsmittel subsumiert werden. Im folgenden ist allgemeingültig nur noch von einem Antriebsmittel die Rede.

Der Riemenantrieb bzw. Kettenantrieb soll dabei unter möglichst geringen Energieverlusten und mit möglichst wenig Wartungsaufwand durch Nachspannen ein großes Drehmoment von der Kurbelwelle auf die Nebenaggregate, insbesondere die Nockenwelle, übertragen. Häufig wird dabei der Antrieb mehrerer Nebenaggregate in einem Riemen- bzw. Kettenantrieb zusammengefaßt. Um das Antriebsmittel - den Riemen bzw. die Kette - unter Spannung zu halten und damit einen möglichst sicheren und verschleißfreien Antrieb zu gewährleisten, werden an geeigneter Stelle des Antriebes sogenannte Riemen- bzw. Kettenspannvorrichtungen vorgesehen, welche das Antriebsmittel führen und quer zur Zugrichtung mit einer Kraft beaufschlagen, so daß das Antriebsmittel ständig unter Spannung steht und gehalten wird. Dies ist für die sichere Übertragung eines genügend großen Drehmomentes bzw. Antriebsmomentes unumgänglich, insbesondere um einen Schlupf des Antriebsmittels zu vermeiden d.h. insbesondere um einen schlupffreien Antrieb zu gewährleisten.

Dadurch, daß derartige Spann- und Führungsvorrichtungen vorgesehen werden, entfällt ein Nachspannen im Rahmen von Instandhaltungsmaßnahmen des Kraftfahrzeuges, beispielsweise einer Inspektion.

Der Verschleiß des Antriebsmittels ist ein kontinuierlicher Vorgang, der sich unter anderem dadurch bemerkbar macht, daß sich die Länge des Antriebsmittels kontinuierlich vergrößert. Eine Spann- und Führungsvorrichtung der beschriebenen Art gleicht diese verschleißbedingten Längenänderungen des Antriebsmittels während des Betriebes ständig und automatisch aus.

Nachteilig an den Spann- und Führungsvorrichtungen nach dem Stand der Technik ist, daß diese Vorrichtungen in der Regel sehr komplex und wartungsintensiv sind. Die Komplexität ergibt sich dabei in erster Linie durch die hohe Anzahl an Bauteilen, aus denen die Spann- und Führungsvorrichtung aufgebaut ist, und zudem aus ihrer Doppelfunktion als Spann- und Führungseinrichtung. Dabei ist es prinzipbedingt nicht einfach, das Antriebsmittel zu führen und gleichzeitig mit einer Querkraft zu beaufschlagen.

Herkömmliche Spann- und Führungsvorrichtungen, wie sie beispielsweise in der US 6,641,496 B2 beschrieben sind, sind modular aufgebaut d. h. sie umfassen ein separates Führungsmittel, welches das Antriebsmittel führt, und ein separates Spannmittel, welches das Antriebsmittel entlang seiner Längsachse mit Zugkräften beaufschlagt und damit spannt. Dabei wird das Spannmittel bei der Montage der Vorrichtung mit den Führungsmitteln lösbar verbunden. Beispielsweise wird das Spannmittel in Gestalt einer Blattfeder auf der Rückseite des Führungsmittels d. h. auf der der Führungsfläche abgewandten Seite befestigt, um das Führungsmittel gegen das Antriebsmittel zu drücken.

Es muß eine ausreichende Anzahl an Lagern zur Aufnahme des Spannmittels und Befestigungsmittel zu dessen Fixierung vorgesehen werden, was für eine weitere Zunahme an Bauteilen und auch für eine Zunahme der Herstellungskosten sorgt. Eine hohe Anzahl an Bauteilen führt grundsätzlich auch zu hohen Montagekosten, die in die Herstellungskosten einfließen, und zu einer Gewichtszunahme des Bauteils, wobei man im Hinblick auf einen geringen Kraftstoffverbrauch immer bemüht ist, eine Bauteilvariante von möglichst geringem Gewicht zu konzipieren.

Die Montagezeit und damit die Montagekosten steigen - wie bereits erwähnt - mit einer zunehmenden Anzahl an Bauteilen. Mit der zunehmenden Bauteilanzahl steigt auch die Wahrscheinlichkeit, bei der Fertigung der einzelnen Bauteile und bei deren Montage Fehler zu begehen, die sich auf die spätere Funktionstüchtigkeit und Lebensdauer der Vorrichtung nachteilig auswirken können.

Des Weiteren hat eine herkömmliche Spann- und Führungsvorrichtung einen vergleichsweise hohen Raumbedarf. Dieser hohe Raumbedarf steht aber dem Ziel der Konstrukteure, im Motorraum des Kraftfahrzeuges ein möglichst effektives d. h. dichtes Packaging der gesamten Antriebseinheit zu realisieren, entgegen.

Vor diesem Hintergrund ist es die Aufgabe der vorliegenden Erfindung eine kombinierte Spann- und Führungsvorrichtung zum Spannen und Führen eines Antriebsmittels bereitzustellen, die ein Führungsmittel, welches das Antriebsmittel führt, und ein Spannmittel, welches das Antriebsmittel spannt, aufweist und mit dem die nach dem Stand der Technik bekannten Nachteile überwunden werden, und das insbesondere kostengünstiger ist.

Eine weitere Teilaufgabe der vorliegenden Erfindung ist es, Verwendungen einer derartigen Spann- und Führungsvorrichtung aufzuzeigen.

Gelöst wird die erste Teilaufgabe durch eine kombinierte Spann- und Führungsvorrichtung zum Spannen und Führen eines Antriebsmittels, die ein Führungsmittel, welches das Antriebsmittel führt, und ein Spannmittel, welches das Antriebsmittel entlang seiner Längsachse mit Zugkräften beaufschlagt und damit spannt, aufweist und die dadurch gekennzeichnet ist, daß das Spannmittel mit dem Führungsmittel einteilig ausgebildet ist, so daß diese Mittel ein monolithisches Bauteil bilden oder die Kombination aus Spannmittel und Führungsmittel aus mindestens zwei Bauteilen aufgebaut ist, die stoffschlüssig und/oder formschlüssig miteinander verbunden sind.

Die beiden vorgeschlagenen Alternativen zeichnen sich dadurch aus, daß eine unlösbare Verbindung zwischen dem Spannmittel und dem Führungsmittel vorgesehen ist. Diese unlösbare Verbindung wird entweder dadurch realisiert, daß die Mittel aus einem Stück als monolithisches Bauteil gefertigt werden oder alternativ dadurch, daß eine unlösbare Verbindung durch Stoffschluß oder Formschluß der beiden Mittel gezielt eingebracht wird. Dieses gemeinsame Lösungsprinzip unterscheidet die erfindungsgemäße Spann- und Führungsvorrichtung von den herkömmlichen Vorrichtungen, die modular aufgebaut sind und damit über eine lösbare Verbindung verfügen.

Dadurch, daß bei der erfindungsgemäßen Spann- und Führungsvorrichtung die Anzahl der Bauteile der Vorrichtung reduziert wird, können die Herstellungskosten und Montagekosten verringert werden. Des weiteren weist die vorgeschlagene Vorrichtung prinzipbedingt ein geringeres Gewicht und einen kleineren Raumbedarf auf, da die Vorrichtung durch die erfindungsgemäße Ausgestaltung kompakter als herkömmliche Vorrichtungen ausgeführt ist. Es werden keine Lager und keine Befestigungsmittel zur Aufnahme des Spannmittels an dem Führungsmittel benötigt.

Somit wird durch die erfindungsgemäße Spann- und Führungsvorrichtung die erste der Erfindung zugrunde liegende Aufgabe gelöst, nämlich ein Vorrichtung bereitzustellen, mit der die nach dem Stand der Technik bekannten Nachteile überwunden werden, und die insbesondere kostengünstiger ist und einen geringeren Raumbedarf aufweist.

Vorteilhaft sind Ausführungsformen der kombinierten Spann- und Führungsvorrichtung, bei denen die Kombination aus Spannmittel und Führungsmittel aus zwei Bauteilen aufgebaut ist, wobei das Spannmittel das erste Bauteil und das Führungsmittel das zweite Bauteil bildet.

Diese Ausgestaltung der erfindungsgemäßen Spann- und Führungsvorrichtung gestattet es, sowohl das Spannmittel als auch das Führungsmittel gezielt aus einem Material bzw. Werkstoff auszubilden, der der jeweiligen Aufgabe und Funktion, die dem einzelnen Bauteil konkret zugewiesen ist, dient und diese unterstützt, wobei insbesondere für die Fertigung des Spannmittels ein elastisches, federndes Material verwendet werden kann, wohingegen für das Führungsmittel vorzugsweise korrosionsbeständige Werkstoffe eingesetzt werden, die zudem vorteilhafterweise geringe Reibwerte in der Kontaktfläche zum Antriebsmittel aufweisen.

Vorteilhaft sind dabei Ausführungsformen der kombinierten Spann- und Führungsvorrichtung, bei denen das Spannmittel zur Ausbildung einer formschlüssigen Verbindung vom Führungsmittel ummantelt ist, wobei Ausführungsformen bevorzugt werden, bei denen das Führungsmittel eine Tasche aufweist, in der das Spannmittel verschiebbar angeordnet ist.

Die Ummantelung des Spannmittels - beispielsweise in Gestalt einer Tasche - sorgt für eine Fixierung des Spannmittels am Führungsmittel d.h. diese Ummantelung ist Lagerung und Befestigung des Spannmittels in einem. Eine Ummantelung des Spannmittels, welches in den meisten Anwendungsfällen aus einem elastischen Metall - beispielsweise einem Federstahl - gefertigt ist, bietet zudem Schutz gegen Korrosion.

Vorteilhaft sind Ausführungsformen der kombinierten Spann- und Führungsvorrichtung, bei denen das Führungsmittel ein Gußteil ist und das Spannmittel als Einlage in das Führungsmittel eingebettet ist. Die Vorrichtung im ganzen besteht dann gewissermaßen aus einem Verbundmaterial, wobei die einzelnen Komponenten des Verbundmaterials im Hinblick auf die Funktion - nämlich das Spannen und das Führen - ausgewählt werden. Ein aus Federstahl gefertigtes Spannmittel könnte auf diese Weise in ein aus Kunststoff aufgebautes Führungsmittel eingegossen werden. Dadurch wären das Spannmittel und das Führungsmittel stoffschlüssig und formschlüssig miteinander verbunden.

Vorteilhaft sind dabei auch Ausführungsformen der kombinierten Spann- und Führungsvorrichtung, bei denen das Spannmittel eine gewebeartige Matrix aufweist.

Die gewebeartige Matrix kann dann in einem gesonderten Fertigungsschritt der Vorrichtung mit einem Überzug versehen werden, der das Führungsmittel der Vorrichtung bildet. Der Überzug kann in einem Gießvorgang, einem Wälzvorgang, mittels Plattieren oder Sputtern aufgetragen werden. Die unlösbare Verbindung zwischen Spann- und Führungsmittel basiert auch bei dieser Ausführungsform auf einer stoffschlüssigen Verbindung, die gegebenenfalls durch eine formschlüssige Verbindung unterstützt wird.

Vorteilhaft sind - wie bereits erwähnt - Ausführungsformen der kombinierten Spann-und Führungsvorrichtung, bei denen das Spannmittel ein aus Federstahl gefertigtes Element aufweist. Vorteile bietet dies, da Federstahl ein kostengünstiger, leicht verfügbarer Werkstoff ist, dessen Verwendung somit zur Lösung der der Erfindung zugrundeliegenden Aufgabe, eine möglichst kostengünstige Vorrichtung bereitzustellen, beiträgt.

Vorteilhaft sind Ausführungsformen der kombinierten Spann- und Führungsvorrichtung, bei denen das Spannmittel und das Führungsmittel zusätzlich kraftschlüssig miteinander verbunden sind. Die Fixierung des Spannmittels am Führungsmittel wird hierdurch weiter unterstützt. Weist beispielsweise das Führungsmittel eine Tasche zur Aufnahme des Spannmittels auf, könnte das Spannmittel im Hinblick auf die Tasche mit einem gewissen Übermaß gefertigt werden, so daß zwischen Spannmittel und Führungsmittel eine gewisse Flächenpressung generiert wird. Vorteile bietet diese Ausführungsform insbesondere dann, wenn die Tasche zur einer Seite offen ausgebildet ist und das Spannmittel durch diese Öffnung in die Tasche eingeschoben wird.

Bei einer monolithisch ausgebildeten Spann- und Führungsvorrichtung sind Ausführungsformen vorteilhaft, bei denen das Führungsmittel aus einem elastischen Material ausgebildet ist, so daß das Führungsmittel auch als Spannmittel dient. Das gezielte Einbringen einer unlösbaren Verbindung von Spann- und Führungsmittel entfällt.

Vorteilhaft sind Ausführungsformen der kombinierten Spann- und Führungsvorrichtung, bei denen die Kombination aus Spannmittel und Führungsmittel als zungenförmiges Element ausgebildet ist, welches an einem Ende verschwenkbar lagerbar ist. Auf diese Weise ist die Kombination bei Kraftbeaufschlagung in der Lage, sich entsprechend und ungehindert zu deformieren. Üblicherweise wird die Kombination aus Spannmittel und Führungsmittel im Betrieb eine mehr oder weniger gekrümmte Form einnehmen. Eine gelenkige Lagerung der Kombination an einem Ende räumt ihr die notwendige Bewegungsfreiheit ein, um auf eine zunehmende oder abnehmende Kraftbeaufschlagung seitens des Antriebsmittels zu reagieren. Das andere Ende der Kombination stützt sich dabei vorzugsweise frei verschieblich auf einem Gegenlager ab.

Vorteilhaft sind dabei Ausführungsformen der kombinierten Spann- und Führungsvorrichtung, bei denen das zungenförmige Element an einem Ende ein Durchgangsloch aufweist, in der es verschwenkbar lagerbar ist. Die gelenkige Lagerung der Kombination kann dadurch in einfacher Weise durch einen in das Durchgangsloch eingeführten Bolzen realisiert werden.

Die zweite der Erfindung zugrunde liegende Teilaufgabe wird gelöst durch eine Verwendung der beschriebenen kombinierten Spann- und Führungsvorrichtung im Steuertrieb einer Nockenwelle einer Brennkraftmaschine.

Die zweite der Erfindung zugrunde liegende Teilaufgabe wird aber auch gelöst durch eine Verwendung der kombinierten Spann- und Führungsvorrichtung im Antrieb eines Nebenaggregats einer Brennkraftmaschine, beispielsweise im Antrieb einer Kühlmittelpumpe, einer Ölpumpe, einer Kraftstoffpumpe, eines mechanischen Laders, einer Lichtmaschine oder dergleichen.

Das bereits für die erfindungsgemäße Vorrichtung Gesagte gilt auch für die erfindungsgemäße Verwendung. Die Verwendung der Vorrichtung senkt die Anzahl der verwendeten Bauteile und die Herstellungskosten im Hinblick auf die Vorrichtung selbst und bei Verwendung der Vorrichtung in einer Brennkraftmaschine bzw. in einem Fahrzeug zwangsläufig auch die Anzahl der Bauteile und die Herstellungskosten der Brennkraftmaschine bzw. des Fahrzeuges.

Vorteilhaft sind Verwendungen der Vorrichtung, bei denen ein Gegenlager verwendet wird, an dem sich die Kombination aus Spannmittel und Führungsmittel mit einem Ende frei verschiebbar abstützt. Hierzu wurden schon im Zusammenhang mit der erfindungsgemäßen Spann- und Führungsvorrichtung Ausführungen gemacht. Ein Gegenlager, an dem sich die Kombination aus Spannmittel und Führungsmittel mit einem Ende frei verschiebbar abstützt, gewährleistet, daß sich die Kombination entsprechend der auf sie ausgeübten Kraft verformen kann und dieser Deformation nicht ungewollt durch die Verwendung eines Festlagers entgegen gewirkt wird.

Vorteilhaft sind dabei Verwendungen der Vorrichtung, bei denen ein Gegenlager verwendet wird, dessen Kontaktfläche eben ausgebildet ist, aber auch Verwendungen der Vorrichtung, bei denen ein Gegenlager verwendet wird, dessen Kontaktfläche kurvig ausgebildet ist. Durch eine gezielte Gestaltung der Oberfläche des Gegenlagers d.h. der Kontaktfläche zwischen dem Gegenlager und der Kombination aus Spannmittel und Führungsmittel kann Einfluß auf die Federlinie der Vorrichtung genommen werden. Dabei wird mit Federlinie der funktionale Zusammenhang zwischen einwirkender Kraft F und Deformation x bezeichnet. Mit der Federkonstante c ergibt sich dieser Zusammenhang zu:

$$F = c \cdot x$$

Die Federung kann entsprechend dem Anforderungsprofil progressiv, degressiv oder linear ausgebildet werden.

Vorteilhaft sind Verwendungen der Vorrichtung, bei denen als Gegenlager die Außenseite des Motorblocks der Brennkraftmaschine verwendet wird oder Verwendungen, bei denen als Gegenlager die Außenseite des Kurbelgehäuses der Brennkraftmaschine verwendet wird.

Vorteile bietet diese Verwendung dadurch, daß bereits vorhandene Flächen verwendet werden und kein Gegenlager im eigentlichen Sinne vorgesehen werden muß. Zudem bieten sich der Motorblock und das Kurbelgehäuse zur Aufnahme des Gegenlagers an, da häufig in unmittelbarer Nachbarschaft zu diesen Bauteilen eine Spann- und Führungsvorrichtung wegen der dort angeordneten Antriebe benötigt und montiert wird. Wird dieses Gegenlager aus der Oberfläche des Motorblocks oder des Kurbelgehäuses herausgearbeitet, wird die Anzahl der Bauteile weiter verringert.

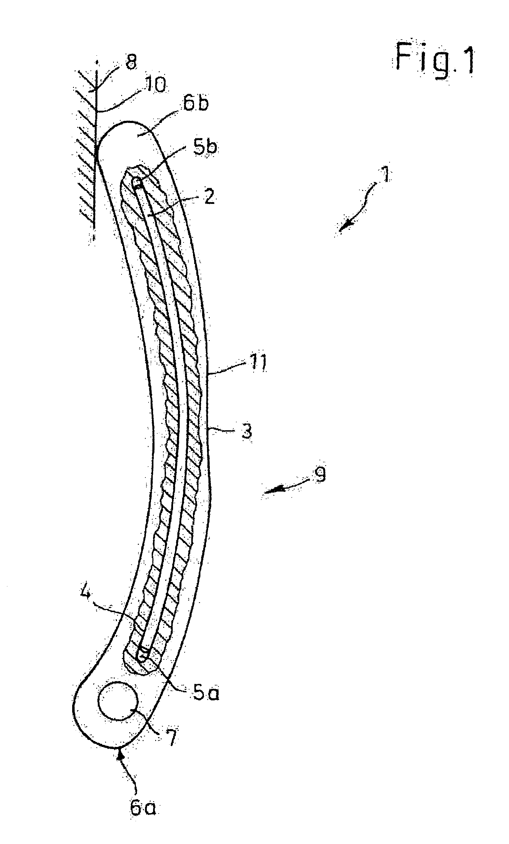

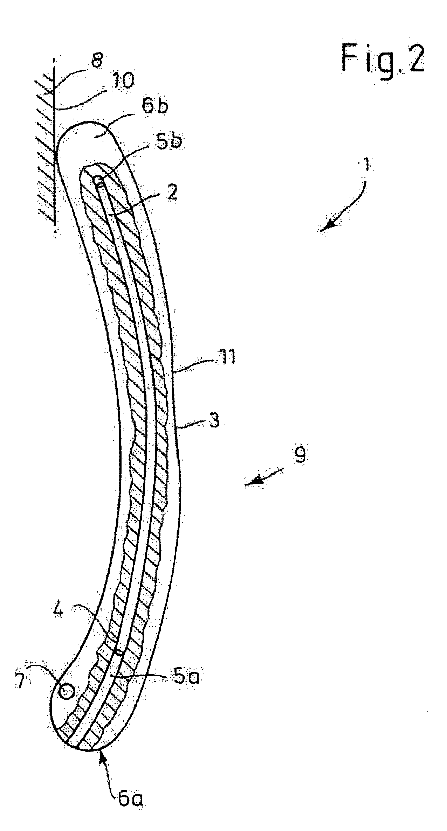

Im folgenden wird die Erfindung anhand von zwei Ausführungsbeispielen gemäß der Figuren 1 und 2 näher beschrieben. Hierbei zeigt:

Fig. 1 schematisch eine erste Ausführungsform der Vorrichtung in einer Seitenansicht und teilweise geschnitten, und

Fig. 2 schematisch eine zweite Ausführungsform der Vorrichtung in einer Seitenansicht und teilweise geschnitten.

Figur 1 zeigt eine Spann- und Führungsvorrichtung 1, bei der das Führungsmittel 3 eine Tasche 4 aufweist, in der das Spannmittel 2 angeordnet ist. Die Ummantelung des Spannmittels 2 sorgt für eine Fixierung des Spannmittels 2 am Führungsmittel 3 d.h. diese Ummantelung dient sowohl als Lagerung als auch als Befestigung des Spannmittels 2 am Führungsmittel 3. Sie bietet zudem Schutz gegen eine Korrosion des Spannmittels 2, welches beispielsweise aus Federstahl gefertigt sein kann.

Die Kombination 9 aus Spannmittel 2 und Führungsmittel 3 bildet dabei eine unlösbare bauliche Einheit, die als zungenförmiges Element ausgebildet ist, welches an einem Ende 6a ein Durchganglloch 7 aufweist, in dem es verschwenkbar lagerbar ist. Das andere Ende 6b der Kombination 9 stützt sich dabei frei verschieblich auf einem Gegenlager 8 ab, dessen Kontaktfläche 10 zur Kombination 9 eben ausgebildet ist.

Auf diese Weise ist die Kombination 9 bei Kraftbeaufschlagung in der Lage, sich entsprechend und ungehindert zu deformieren, wobei die Kombination 9 eine mehr oder weniger gekrümmte Form aufweist.

Um eine ungehinderte Deformation der Vorrichtung 1 zu gewährleisten, ist die Tasche 4 in dem Führungsmittel 3 in der Art ausgebildet, daß an beiden Enden der Tasche 4 ein Freiraum 5a,5b bereitgestellt wird, der bei einer zunehmenden Krümmung der Kombination 9 aus Spannmittel 2 und Führungsmittel 3 vom Spannmittel 2 genutzt werden kann. Auf ihrer konvexen Außenseite verfügt die Kombination 9 über eine Führungsfläche 11, mit der das Antriebsmittel geführt wird und über die die Spannkraft in das Antriebsmittel eingeleitet wird.

Figur 2 zeigt schematisch eine zweite Ausführungsform der Vorrichtung 1 in einer Seitenansicht, wobei die Vorrichtung 1 teilweise im Schnitt dargestellt ist. Es sollen nur die Unterschiede zu der in Figur 1 dargestellten Ausführungsform erörtert werden, weshalb im übrigen Bezug genommen wird auf Figur 1. Für dieselben Bauteile wurden dieselben Bezugszeichen verwendet.

Im Unterschied zu der in Figur 1 dargestellten Ausführungsform verfügt das Führungsmittel 3 der zweiten Ausführungsform über eine Tasche 4, die zu einem Ende 6a der Kombination 9 hin offen ausgebildet ist, so daß das Spannmittel 2 nicht vollständig von dem Führungsmittel 3 ummantelt ist.

Das Spannmittel 2 wird durch die Öffnung in die Tasche 4 eingeschoben. Die Fixierung des Spannmittels 2 am Führungsmittel 3 wird vorzugsweise durch eine zusätzliche kraftschlüssige Verbindung unterstützt. Bei der in Figur 2 dargestellten Ausführungsform, bei der das Führungsmittel 3 eine Tasche 4 zur Aufnahme des Spannmittels 2 aufweist, wird das Spannmittel 2 im Hinblick auf die Tasche 4 mit einem gewissen Übermaß gefertigt, so daß zwischen Spannmittel 2 und Führungsmittel 3 eine Flächenpressung generiert wird.

**Bezugszeichen**

1 Kombinierte Spann- und Führungsvorrichtung
2 Spannmittel
3 Führungsmittel
4 Tasche
5a Freiraum
5b Freiraum
6a ein Ende der Kombination aus Spannmittel und Führungsmittel
6b anderes Ende der Kombination aus Spannmittel und Führungsmittel
7 Durchgangsloch
8 Gegenlager
9 Kombination aus Spannmittel und Führungsmittel
10 Kontaktfläche
11 Führungsfläche

**Patentansprüche**

**1.** Kombinierte Spann- und Führungsvorrichtung (1) zum Spannen und Führen eines Antriebsmittels wie beispielsweise einer Kette oder eines Riemens, insbesondere zur Verwendung in einer Brennkraftmaschine, mit einem Führungsmittel (3), welches das Antriebsmittel führt, und einem Spannmittel (2), welches das Antriebsmittel entlang seiner Längsachse mit Zugkräften beaufschlagt und damit spannt, **dadurch gekennzeichnet, daß** das Spannmittel (2) mit dem Führungsmittel (3) einteilig ausgebildet ist, so daß diese Mittel (2,3) ein monolithisches Bauteil bilden, oder die Kombination (9) aus Spannmittel (2) und Führungsmittel (3) aus mindestens zwei Bauteilen aufgebaut ist, die stoffschlüssig und/oder formschlüssig miteinander verbunden sind, so daß eine unlösbare Verbindung zwischen dem Spannmittel (2) und dem Führungsmittel (3) vorgesehen ist.

**2.** Kombinierte Spann- und Führungsvorrichtung (1) nach Anspruch 1, **dadurch gekennzeichnet, daß**

die Kombination (9) aus Spannmittel (2) und Führungsmittel (3) aus zwei Bauteilen aufgebaut ist, wobei das Spannmittel (2) das erste Bauteil und das Führungsmittel (3) das zweite Bauteil bildet.

3. Kombinierte Spann- und Führungsvorrichtung (1) nach Anspruch 2,
**dadurch gekennzeichnet, daß**
das Spannmittel (2) zur Ausbildung einer formschlüssigen Verbindung vom Führungsmittel (3) ummantelt ist.

4. Kombinierte Spann- und Führungsvorrichtung (1) nach Anspruch 3,
**dadurch gekennzeichnet, daß**
das Führungsmittel (3) eine Tasche (4) aufweist, in der das Spannmittel (2) verschiebbar angeordnet ist.

5. Kombinierte Spann- und Führungsvorrichtung (1) nach Anspruch 2 oder 3, **dadurch gekennzeichnet, daß**
das Führungsmittel (3) ein Gußteil ist und das Spannmittel (2) als Einlage in das Führungsmittel (3) eingebettet ist.

6. Kombinierte Spann- und Führungsvorrichtung (1) nach einem der Ansprüche 2 bis 5,
**dadurch gekennzeichnet, daß**
das Spannmittel (2) eine gewebeartige Matrix aufweist.

7. Kombinierte Spann- und Führungsvorrichtung (1) nach einem der Ansprüche 2 bis 6,
**dadurch gekennzeichnet, daß**
das Spannmittel (2) ein aus Federstahl gefertigtes Element aufweist.

8. Kombinierte Spann- und Führungsvorrichtung (1) nach einem der Ansprüche 2 bis 7,
**dadurch gekennzeichnet, daß**
das Spannmittel (2) und das Führungsmittel (3) zusätzlich kraftschlüssig miteinander verbunden sind.

9. Monolithisch ausgebildete Spann- und Führungsvorrichtung (1) nach Anspruch 1,
**dadurch gekennzeichnet, daß**
das Führungsmittel (3) aus einem elastischen Material ausgebildet ist, so daß das Führungsmittel (3) auch als Spannmittel (2) dient.

10. Kombinierte Spann- und Führungsvorrichtung (1) nach einem der vorherigen Ansprüche,
**dadurch gekennzeichnet, daß**
die Kombination (9) aus Spannmittel (2) und Führungsmittel (3) als zungenförmiges Element ausgebildet ist, welches an einem Ende (6a) verschwenkbar lagerbar ist.

11. Kombinierte Spann- und Führungsvorrichtung (1) nach Anspruch 10,
**dadurch gekennzeichnet, daß**
das zungenförmige Element an einem Ende (6a) ein Durchgangsloch (7) aufweist, in der es verschwenkbar lagerbar ist.

12. Verwendung einer kombinierten Spann- und Führungsvorrichtung (1) nach einem der vorherigen Ansprüche,
**dadurch gekennzeichnet, daß**
die Vorrichtung (1) im Steuertrieb einer Nockenwelle einer Brennkraftmaschine verwendet wird.

13. Verwendung einer kombinierten Spann- und Führungsvorrichtung (1) nach einem der Ansprüche 1 bis 11,
**dadurch gekennzeichnet, daß**
die Vorrichtung (1) im Antrieb eines Nebenaggregats einer Brennkraftmaschine, beispielsweise im Antrieb einer Kühlmittelpumpe, einer Ölpumpe, einer Kraftstoffpumpe, eines mechanischen Laders, einer Lichtmaschine oder dergleichen, verwendet wird.

14. Verwendung nach Anspruch 12 oder 13,
**dadurch gekennzeichnet, daß**
ein Gegenlager (8) verwendet wird, an dem sich die Kombination (9) aus Spannmittel (2) und Führungsmittel (3) mit einem Ende (6b) frei verschiebbar abstützt.

15. Verwendung nach Anspruch 14,
**dadurch gekennzeichnet, daß**
ein Gegenlager (8) verwendet wird, dessen Kontaktfläche (10) eben ausgebildet ist.

16. Verwendung nach Anspruch 14,
**dadurch gekennzeichnet, daß**
ein Gegenlager (8) verwendet wird, dessen Kontaktfläche (10) kurvig ausgebildet ist.

17. Verwendung nach einem der Ansprüche 14 bis 16,
**dadurch gekennzeichnet, daß**
als Gegenlager (8) die Außenseite des Motorblocks der Brennkraftmaschine verwendet wird.

18. Verwendung nach einem der Ansprüche 14 bis 16,
**dadurch gekennzeichnet, daß**
als Gegenlager (8) die Außenseite des Kurbelgehäuses der Brennkraftmaschine verwendet wird.

**Claims**

1. Combined clamping and guiding apparatus (1) for tensioning and guiding a drive means such as a chain or a belt, in particular for use in an internal combustion engine, having a guide means (3) which guides the drive means, and having a tensioning means (2) which loads the drive means along its longitudinal axis with tensile forces and thus tensions it, **characterized in that** the tensioning means (2) is formed in one piece with the guide means (3), with the result that said means (2, 3) form a monolithic component, or the combination (9) of tensioning means (2) and guide means (3) is constructed from at least two components which are connected to one another with a material-to-material fit or in a positively locking manner, with the result that a non-releasable connection is provided between the tensioning means (2) and the guide means (3).

2. Combined tensioning and guiding apparatus (1) according to Claim 1, **characterized in that** the combination (9) of tensioning means (2) and guide means (3) is constructed from two components, the tensioning means (2) forming the first component and the guide means (3) forming the second component.

3. Combined tensioning and guiding apparatus (1) according to Claim 2, **characterized in that**, in order to form a positively locking connection, the tensioning means (2) is surrounded by the guide means (3).

4. Combined tensioning and guiding apparatus (1) according to Claim 3, **characterized in that** the guide means (3) has a pocket (4), in which the tensioning means (2) is arranged displaceably.

5. Combined tensioning and guiding apparatus (1) according to Claim 2 or 3, **characterized in that** the guide means (3) is a cast part and the tensioning means (2) is embedded in the guide means (3) as an insert.

6. Combined tensioning and guiding apparatus (1) according to one of Claims 2 to 5, **characterized in that** the tensioning means (2) has a fabric-like matrix.

7. Combined tensioning and guiding apparatus (1) according to one of Claims 2 to 6, **characterized in that** the tensioning means (2) has an element which is produced from spring steel.

8. Combined tensioning and guiding apparatus (1) according to one of Claims 2 to 7, **characterized in that** the tensioning means (2) and the guide means (3) are additionally connected to one another non-positively.

9. Tensioning and guiding apparatus (1) of monolithic configuration according to Claim 1, **characterized in that** the guide means (3) is formed from an elastic material, with the result that the guide means (3) also serves as tensioning means (2).

10. Combined tensioning and guiding apparatus (1) according to one of the preceding claims, **characterized in that** the combination (9) of tensioning means (2) and guide means (3) is configured as a tongue-shaped element which can be mounted pivotably at one end (6a).

11. Combined tensioning and guiding apparatus (1) according to Claim 10, **characterized in that**, at one end (6a), the tongue-shaped element has a through hole (7), in which it can be mounted pivotably.

12. Use of a combined tensioning and guiding apparatus (1) according to one of the preceding claims, **characterized in that** the apparatus (1) is used in the timing drive of a camshaft of an internal combustion engine.

13. Use of a combined tensioning and guiding apparatus (1) according to one of Claims 1 to 11, **characterized in that** the apparatus (1) is used in the drive of an ancillary unit of an internal combustion engine, for example in the drive of a coolant pump, an oil pump, a fuel pump, a mechanical supercharger, an alternator or the like.

14. Use according to Claim 12 or 13, **characterized in that** a counterbearing (8) is used, on which the combination (9) of tensioning means (2) and guide means (3) is supported with one end (6b) such that it can be displaced freely.

15. Use according to Claim 14, **characterized in that** a counterbearing (8) is used, the contact face (10) of which is of planar configuration.

16. Use according to Claim 14, **characterized in that** a counterbearing (8) is used, the contact face (10) of which is of curved configuration.

17. Use according to one of Claims 14 to 16, **characterized in that** the outer side of the engine block of the internal combustion engine is used as counterbearing (8).

18. Use according to one of Claims 14 to 16, **characterized in that** the outer side of the crankcase of the internal combustion engine is used as counterbearing (8).

## Revendications

1. Dispositif de tensionnement et de guidage combiné (1) pour tendre et guider un moyen d'entraînement comme par exemple une chaîne ou une courroie, notamment pour l'utilisation dans un moteur à combustion interne, comprenant un moyen de guidage (3) qui guide le moyen d'entraînement, et un moyen de tensionnement (2) qui sollicite avec des forces de traction le moyen d'entraînement le long de son axe longitudinal et de ce fait le tend,
**caractérisé en ce que**
le moyen de tensionnement (2) est réalisé d'une seule pièce avec le moyen de guidage (3), de sorte que ces moyens (2, 3) forment un composant monolithique, ou la combinaison (9) du moyen de tensionnement (2) et du moyen de guidage (3) est constituée d'au moins deux composants qui sont connectés l'un à l'autre par engagement par liaison de matière et/ou par correspondance géométrique de sorte qu'une connexion permanente soit prévue entre le moyen de tensionnement (2) et le moyen de guidage (3).

2. Dispositif de tensionnement et de guidage combiné (1) selon la revendication 1,
**caractérisé en ce que**
la combinaison (9) du moyen de tensionnement (2) et du moyen de guidage (3) est constituée de deux composants, le moyen de tensionnement (2) formant le premier composant et le moyen de guidage (3) formant le deuxième composant.

3. Dispositif de tensionnement et de guidage combiné (1) selon la revendication 2,
**caractérisé en ce que**
le moyen de tensionnement (2) est entouré par le moyen de guidage (3) pour former une connexion par engagement par correspondance géométrique.

4. Dispositif de tensionnement et de guidage combiné (1) selon la revendication 3,
**caractérisé en ce que**
le moyen de guidage (3) présente une cavité (4) dans laquelle le moyen de tensionnement (2) est disposé de manière déplaçable.

5. Dispositif de tensionnement et de guidage combiné (1) selon la revendication 2 ou 3,
**caractérisé en ce que**
le moyen de guidage (3) est une pièce en fonte et le moyen de tensionnement (2) est noyé en tant qu'insert dans le moyen de guidage (3).

6. Dispositif de tensionnement et de guidage combiné (1) selon l'une quelconque des revendications 2 à 5,
**caractérisé en ce que**
le moyen de tensionnement (2) présente une matrice de type tissu.

7. Dispositif de tensionnement et de guidage combiné (1) selon l'une quelconque des revendications 2 à 6,
**caractérisé en ce que**
le moyen de tensionnement (2) présente un élément fabriqué en acier à ressort.

8. Dispositif de tensionnement et de guidage combiné (1) selon l'une quelconque des revendications 2 à 7,
**caractérisé en ce que**
le moyen de tensionnement (2) et le moyen de guidage (3) sont en outre connectés l'un à l'autre par engagement par force.

9. Dispositif de tensionnement et de guidage réalisé de manière monolithique (1) selon la revendication 1,
**caractérisé en ce que**
le moyen de guidage (3) est réalisé en un matériau élastique de sorte que le moyen de guidage (3) serve aussi de moyen de tensionnement (2).

10. Dispositif de tensionnement et de guidage combiné (1) selon l'une quelconque des revendications précédentes,
**caractérisé en ce que**
la combinaison (9) du moyen de tensionnement (2) et du moyen de guidage (3) est réalisée sous forme d'élément en forme de langue qui peut être monté de manière pivotante à une extrémité (6a).

11. Dispositif de tensionnement et de guidage combiné (1) selon la revendication 10,
**caractérisé en ce que**
l'élément en forme de langue présente à une extrémité (6a) un trou de passage (7) dans lequel il peut être monté de manière pivotante.

12. Utilisation d'un dispositif de tensionnement et de guidage combiné (1) selon l'une quelconque des revendications précédentes,
**caractérisée en ce que**
le dispositif (1) est utilisé pour l'entraînement de commande d'un arbre à cames d'un moteur à combustion interne.

13. Utilisation d'un dispositif de tensionnement et de guidage combiné (1) selon l'une quelconque des revendications 1 à 11,
**caractérisée en ce que**
le dispositif (1) est utilisé dans l'entraînement d'une unité auxiliaire d'un moteur à combustion interne, par exemple dans l'entraînement d'une pompe de réfrigérant, d'une pompe à huile, d'une pompe à carburant, d'un turbocompresseur mécanique, d'un alternateur ou similaire.

14. Utilisation selon la revendication 12 ou 13,
**caractérisée en ce que**
l'on utilise un contre-palier (8) sur lequel s'appuie la combinaison (9) du moyen de tensionnement (2) et du moyen de guidage (3) avec une extrémité (6b), de manière librement déplaçable.

**15.** Utilisation selon la revendication 14,
**caractérisée en ce que**
l'on utilise un contre-palier (8) dont la surface de contact (10) est réalisée sous forme plane.

**16.** Utilisation selon la revendication 14,
**caractérisée en ce que**
l'on utilise un contre-palier (8) dont la surface de contact (10) est réalisée sous forme courbe.

**17.** Utilisation selon l'une quelconque des revendications 14 à 16,
**caractérisée en ce que**
l'on utilise en tant que contre-palier (8) le côté extérieur du bloc moteur du moteur à combustion interne.

**18.** Utilisation selon l'une quelconque des revendications 14 à 16,
**caractérisée en ce que**
l'on utilise en tant que contre-palier (8) le côté extérieur du carter de vilebrequin du moteur à combustion interne.

EP 1 610 032 B1

Fig.1

10

EP 1 610 032 B1

Fig.2

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6641496 B2